(19)

Europäisches
Patentamt
European
Patent Office
Office européen
des brevets

(11) **EP 3 205 387 A1**

(12) **EUROPEAN PATENT APPLICATION**

(43) Date of publication:
16.08.2017 Bulletin 2017/33

(21) Application number: 16000517.9

(22) Date of filing: 15.02.2016

(51) Int Cl.:
*B01D 53/22* (2006.01)
*B01D 69/10* (2006.01)
*B01D 69/02* (2006.01)
*C01B 39/14* (2006.01)
*B01D 67/00* (2006.01)
*B01D 71/02* (2006.01)
*B01J 20/18* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Lercher, Johannes August**
**85521 Ottobrunn (DE)**

(72) Inventors:
• **Peng, Bo**
**80997 München (DE)**
• **Dou, Herui**
**315040 Zhejiang Province (CN)**
• **Ember, Erika Elisabeta**
**85748 Garching (DE)**
• **Lercher, Johannes August**
**85521 Ottobrunn (DE)**

Remarks:
Amended claims in accordance with Rule 137(2) EPC.

(54) **PREPARATION AND USE OF ZEOLITIC MEMBRANES FOR SELECTIVE REMOVAL OF WATER**

(57) The present invention relates to the development of a preparation method for membranes able to selectively remove water from a mixture. The method enables the preparation of shape selective membranes with high surface homogeneity and water permeation selectivity.

In the present invention, the development of a preparation procedure for selective water separation membranes has been achieved. The present membranes are composed by two parts, a chemically inert substrate with high thermal and mechanical stability suitable for a dense membrane formation and the component with zeolitic microcrystalline framework with unique shape selectivity. Overall, the advantages of the present invention are 1) high selectivity for water permeation, 2) high thermal and mechanical stability, 3) capability of operation under a wide range of process conditions. Therefore, the present membranes can be applied in continuous dehydration units of alcohols, in direct methanol fuel cells for minimizing the methanol crossover between anode and cathode, other devices where the permeation of methanol and/or other alcohols has to be reduced while water permeation is allowed.

**Figure 5**

EP 3 205 387 A1

**Description**

**Field of invention**

The present invention relates to the preparation of zeolitic membranes with high shape selectivity able to separate water from a homogeneous mixture containing substances with comparable physicochemical properties, e.g. kinetic diameters and polarities.

**Background of the invention**

Global methanol demand is expected to increase significantly, from 60.7 million metric tons (MMT) in 2013 to more than 109 MMT in 2023, with an average annual growth rate of ~ 6% (according to research from IHS). Currently, the large scale of methanol production is based on syngas which is obtained either from catalytic steam reforming of natural gas or from gasification of coal. Further conversion of syngas into methanol is normally based on ICI (Imperial Chemical Industries) technology, including three steps, *i.e.* syngas compression, methanol synthesis and distillation of crude methanol.

As methanol is applied in various fields, such as feedstock for synthesis of formaldehyde, methyl tertiary butyl ether, acetic acid, methyl methacrylate, dimethyl terephthalate, *etc.,* feedstock of methanol-to-olefin and methanol-to-gasoline technologies, antifreeze, inhibitor and solvent, high methanol purity standards are required based on specific application. The main impurity from the leaving gas stream of methanol synthesis includes water, alcohols and other organics. Lighter impurities with low boiling points are separated via low-temperature boiling while heavier impurities are removed in a second distillation column. At last, several distillation columns are applied for the removal of excess water. The final distillations are highly energy demanding although essential for methanol purification. Even by using modern technological approaches, in which the overall energy input has been minimized in various approaches, the inevitable energy consumption is still as high as $8 \sim 9 \times 10^8$ Joule / ton of methanol (R. H. Scott, US4013521, 1977**;** A. Pinto, US4065483, 1977**;** A. Pinto, US4419940, 1979**;** A. Pinto, US4210495, 1980**;** Y. Saito, O. Hashimoto, US4744869, 1988**;** C. Rescalli, R. Ricci, A. Scazzosi, F. Cianci, US4874474, 1989**;** R. L. Kao, Sarabijit. S. Randhava, Surjit. S. Randhava, US5079267, 1992**;** D. F. Othmer, US4405343, 1983**)**

Besides distillation technologies, widely applied due to their high reusability, flexibility and competence in continuous operation, the membrane mediated vapor permeation (VP) and pervaporation (PV), as effective alternative separation processes, have attracted increasing interests from chemical industry. The methanol purification with sufficient permeation selectivity would be a convenient solution for the current methanol production process. To be feasible in application, the proposed zeolitic membranes have to possess high selectivity and stability at high flux as well as the competence of operating under wide range of conditions.

Compared to other separation technologies, e.g. distillation, extraction and sorption, due to their economical feasibility, processes involving membranes have been applied for dehydration of a series of organic liquids, e.g. ethanol, *i*-propanol and ethylene glycol (H. L. Fleming, Chem. Eng. Prog. 1992, 46-52; R. Y. M. Huang (Ed.), Pervaporation Membrane Separation Processes, Elsevier, Amsterdam, 1991**;** S.I. Semenova, H. Ohya, K. Soontarapa, Desalination 110, 1997, 251-286; X. Feng, R. Y. M. Huang, Ind. Eng. Chem. Res. 36, 1997, 1048-1066). However, there are still no successful applications for selective separation of methanol and water, mainly because of the similarities in molecular size, polarity and other chemical properties of these two compounds (Y. Morigami, M. Kondo, J. Abe, H. Kita, K. Okamoto, Sep. Purif. Tech. 25, 2001, 251-260). Zeolites, as a family of aluminosilicate compounds bearing different operation units, *i.e.* pores, channels and cages, have been already successfully applied in adsorption, catalysis, *etc.* Their characteristic structures make themselves especially attractive for water removal under ambient temperatures and medium water concentrations, owing to the shape selectivity given by the existing operation units. With different considerations and focuses, specific chemical modification is also attempted for further optimization of the structures of the operation units. Based on the similarities of methanol and water, unfortunately, the shape selectivity of existing zeolites operating under process conditions, *i.e.* high temperature and pressure, wide range of water concentrations, is still too low to be practically feasible. In order to improve the separation factor, current efforts are mainly concerned to the enlargement of the membrane's thickness and / or to the reduction of the liquid fluxes. However, the low selectivity of existing materials operating under process conditions is still the major drawback in scalability of the membranes.

The survey of issued patents covered the field of methanol dehydration and zeolitic membranes from 1990 till present (2015). Special attention was given to LTA zeolitic membranes and their chemical modifications. Patents regarding successful methanol dehydration are all emphasizing distillation-based technologies. Even among widely used organic / polymeric membranes, no successful methanol dehydration membranes were formulated. A patent of zeolitic Na-LTA membrane for alcohol dehydration with rather broad claims, including methanol, has been applied by Okamoto *et al.* (K. Okamoto, H. Kita, M. Kondo, N. Miyake, Y. Matsuo, US5554286, 1996**).** However, in the content of that patent, no example is available with respect to methanol dehydration. Some information about the membrane performance could be tracked by publication thereafter. (K. Okamoto, H. Kita, K. Horii, K. Tanaka, M Kondo, Ind. Eng. Chem. Res. 40, 2001, 163-175). Although it was reported that a Na-LTA zeolitic membrane with separation factor in methanol dehydration of >1000 (at 323 K) has been developed, the flux is extremely low, so that Na-LTA zeolitic membrane is far away from practical applications. Moreover, the literature reproducibility on that membrane was not reported.

Some other results concerning methanol dehydration by LTA zeolitic membranes have been published in scientific journals, the separation factors are, however, still too low to be feasible for practical applications (Q. Liu, R. D. Noble, J. L. Falconer, H. H. Funke, J. Membr. Sci. 117, 1996, 163-174; N. Wang, Y. Liu, A. Huang, J. Caro, Microporous Mesoporous Mater. 207, 2015, 33-38). The reported commercialized LTA membranes have the water permeance of $10^{-7} \sim 10^{-6}$ mol m$^{-2}$ s$^{-1}$ Pa$^{-1}$ in water / alcohol separation (K. Sato, K. Aoki, K. Sugimoto, K. Izumi, S. Inoue, J. Saito, S. Ikeda, T. Nakane, Microporous Mesoporous Mater. 115, 2008, 184-188).

## Summary of the invention

A membrane preparation method allowing the synthesis of zeolitic membranes with high shape selectivity and separation factor (especially concerning high temperature water / methanol separation) has been developed. The synthesis comprises two main steps, *i.e.* zeolitic membrane formation and chemical modification.

## Brief description of the drawings

**Figure 1** is an SEM image of substrate before membrane synthesis (magnitude × 2000, **Example 1).**

**Figure 2** is an SEM image of NaA zeolite membrane on substrate (surface view, magnitude × 2000, **Example 2).**

**Figure 3 is** an SEM image of NaA zeolite membrane on substrate (side view, magnitude × 2000, **Example 2).**

**Figure 4** is a schematic diagram of membrane vapor permeation experimental unit (1: N$_2$ Gas bottle; 2: Mass flow controlers; 3: Four-way valves; 4: Bubble bottles and water bath; 5 Membrane vapor permeation cell; 6 Differential pressure gauge; 7: Temperature controller; 8: pressure gauge; 9: Mass spectrometer; 10: Relief valve; **Example 5).**

**Figure 5** is an overview of separation factors of zeolitic membranes with different K / Na ratios in water / methanol separation measurements ($T$= 125 °C, **Example 6).**

**Figure 6** is an overview of water permeances of zeolitic membranes with different K / Na ratios in water / methanol separation measurements ($T$= 125 °C, **Example 6).**

## Detailed description

Hereinafter, the preparation procedure of the current invention is described in detail.

First, a dense uniform membrane with very few defects is synthesized by hydrothermal procedure. In this step, aluminate solution prepared by dissolving sodium hydroxide with sodium aluminate in water and silicate solution prepared by dissolving sodium hydroxide with sodium methasilicate in water mix together, resulting clear mother liquid. Other aluminum and silicon sources can also be used, but final molar ratio of resulting mother liquid is subject to change. Following that, hydrothermal synthesis is performed under atmospheric pressure with substrate using prepared mother liquid.

The second step refers to the selective chemical modification of synthesized membrane in the first step. Therefore, a mixed solution of potassium and sodium nitrates is used. The chemical modification is repeated several times and fresh aliquots of mixed solution are used for each repetition. After chemical modification, the membrane is rinsed and immersed into water.

## Examples

Hereinafter, the present invention is described in more detail and specifically with reference to the Examples, which however are not intended to limit the present invention.

*Example 1: Preparation of substrate for membrane synthesis*

Zeolite 3A (Sigma-Aldrich, UOP, beads 2.0 mm, $K_{4.65}Na_{6.88}Al_{11.53}Si_{12.47}O_{48}$) was selected for the wafers which were used as the membrane substrate. The procedure is as described in below steps a ~ d.

a. 50 g of zeolite 3A was charged into 200 ml 1.0 M $KNO_3$ aqueous solution which was used for chemical modification. The chemical modification lasted for 5 ~ 12 hours at ambient temperature, and was repeated for 7 ~ 10 times by using fresh aliquots of $KNO_3$ solution for each repetition.

b. After chemical modification, the zeolite was washed with deionized water for 5 times and then kept at room temperature for 24 hours and then dried at 378 K for another 24 hours. The dried zeolite has a chemical composition of $K_{10.41}Na_{0.93}Al_{11.43}Si_{12.66}O_{48}$ as determined by elemental analysis and was named as *KA zeolite.*

c. KA zeolite was ground to fine powder and sieved (primary particle size is < 0.05 $\mu$m). 0.75 g of KA fine powder was used for each wafer and the pressing strength was kept at 17.6 kN cm$^{-2}$ for 10 seconds. By this means pressed wafers have a diameter of 19 mm and a thickness of 2 mm.

The pressed KA wafers were calcined in a muffle oven at 873 K for 4 hours with a heating rate of 1.0 K min$^{-1}$.

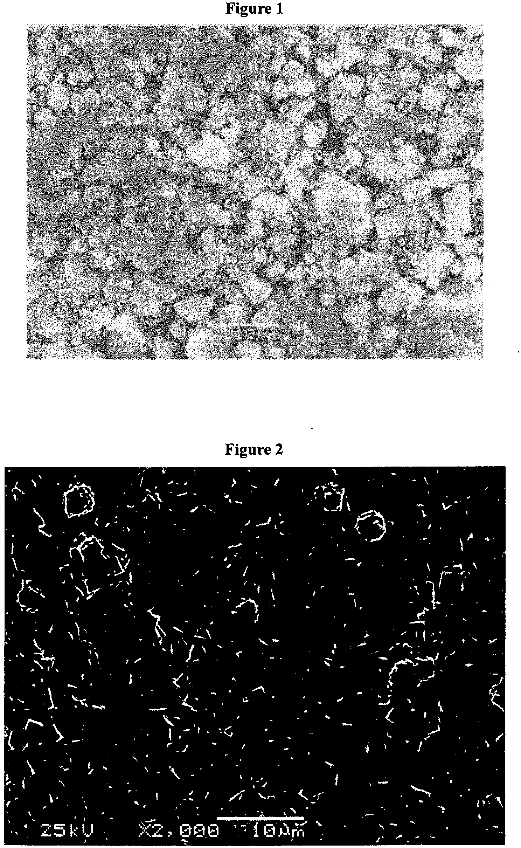

A typical SEM image of prepared zeolitic substrate is shown in Figure 1.

*Example 2: Zeolitic membrane synthesis over KA wafer (1)*

Zeolitic membrane over KA wafers was synthesized via a hydrothermal approach and the procedure is described as follows, below steps a ~ e.

a. The aluminate solution was prepared at ambient temperature, by dissolving 197 g of sodium hydroxide and 20 g of sodium aluminate (53 % $Al_2O_3$, 43 % $Na_2O$) in 894 mL of deionized water. After dissolving the solids in water and stirring for 2 hours, the transparent solution was sealed and kept at room temperature overnight.

b. The silicate solution was prepared at ambient temperature, by mixing 208 g of sodium hydroxide, 78 g of silica sol (40 % $SiO_2$) and 871 mL of deionized water. After dissolving and stirring for 2 hours, the solution was also sealed and kept at room temperature overnight.

c. The mother liquid was prepared by pouring the aluminate solution into the prepared silicate solution under vigorous stirring. And the stirring lasted for 2 hours to make sure that the mother liquid was homogenous. The molar ratio ($SiO_2$: $Al_2O_3$: $Na_2O$: $H_2O$) of the resultant clear solution is 5:1:50:1000.

d. The KA substrate obtained from **Example 1** was placed vertically in a 100 ml Teflon autoclave, into which 80 ml of the mother liquid obtained in *2c* was added. The autoclave was put in an air oven which was kept at 358 K. The hydrothermal synthesis lasted for 1.5 hours. Afterwards, the autoclave was taken out from the oven and cooled down to ambient temperature. In order to get denser membrane with fewer defects, the obtained material was placed in the autoclave and the procedure was repeated for one more time following described in *2b and c.*

e. After hydrothermal synthesis, the membrane was rinsed and then immersed in deionized water for 1 day. Meanwhile, the alkalified water was exchanged for several times. The treated membrane was then dried in air at ambient temperature overnight and then collected for further treatments, characterizations or tests.

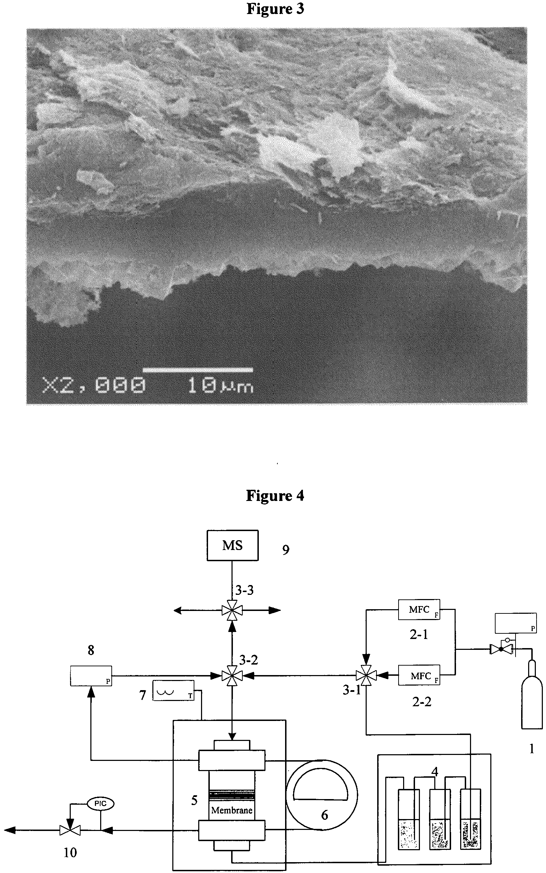

The SEM images of prepared membrane over substrate are shown in Figure 2 and 3.

*Example 3: Zeolitic membrane synthesis over KA wafer (2)*

By following the hydrothermal method as exemplified in **Example 2,** except for different aluminum and silicon sources that were chosen and also different synthesis temperatures, the same membranes were obtained. Specifically, the differences are as follows.

a. The aluminate solution was prepared at ambient temperature, by adding 208 g of sodium hydroxide and 7.2 g of aluminum to 697 mL of deionized water.

b. The silicate solution was prepared at ambient temperature, by mixing 196 g of sodium hydroxide, 116 g of sodium silicate ($Na_2O$, 8 %, $SiO_2$, 28 %) in 630 mL of deionized water.

c. The molar ratio ($SiO_2$: $Al_2O_3$: $Na_2O$: $H_2O$) of a clear solution is 5:1:50:800.

d. The temperature of hydrothermal synthesis was kept at 363 K. The hydrothermal synthesis lasted for 1 h. In order to get denser membrane with few defects, the hydrothermal synthesis was repeated for another time.

*Example 4: Chemical modification of synthesized membranes*

The membranes synthesized in **Example 2 and 3** were treated with prepared sodium nitrate and potassium nitrate mixture for chemical modification. Membranes with different cations and different K/Na ratios were obtained from the process as described in below steps a and b.

a. One prepared membrane was charged into 50 ml 1.0 M $NaNO_3$ aqueous solution which was used for the chemical modification. The chemical modification lasted for 5 ~ 12 hours at ambient temperature, and was repeated for 7 ~ 10 times by using fresh aliquots of $NaNO_3$ solution for each repetition. After chemical modification, the membrane was rinsed and immersed into deionized water for 24 hours to remove excessive $NaNO_3$, and a Na (100 %, according to elemental analysis) membrane was thereby prepared.
b. The membranes with different K/Na ratios were prepared as stated in **Example 4a** with the only difference that the solutions used for the chemical modification are a mixture of $KNO_3$ and $NaNO_3$ with a total concentration of 1.0 M and varying molar ratios in the range of 93:7 to 0:100. For example, the membrane prepared with a solution of 93:7 resulted in a membrane with a K/Na ratio of 90:10 which was named as K90 membrane; the membrane prepared with a solution of 78:22 has a K/Na ratio of 70:30 and was named as K70 membrane.

*Example 5: Vapor permeation experiments of KA wafer*

The apparatus for vapor permeation experiments is depicted in Figure 4. Nitrogen was used as a carrier gas and kept at a flow rate of 50 ml/min for both mass flow controllers (MFC 2-1 and 2-2). The feed gas was introduced to three serially-arranged bubblers, which were filled with a mixture of water (15 %) and ethanol or methanol (85 %) and kept at 293 K in a controlled water bath. The saturated vapor mixture went into the vapor permeation cell equipped with KA wafer, which was sealed with two FKM o-rings. The vapor permeation cell was heated by a heater with a temperature controller. The permeate-contained carrier gas was analyzed by mass spectroscopy (MS, PFEIFFER VACUUM). From the concentrations of the permeated water and' alcohols contained in the carrier gas, the separation factors can be calculated according Eq. 1. ($\alpha$ is separation factor, $Y_W/Y_O$ is the weight ratio of water to alcohol in the permeate, $X_W/X_O$ is the weight ratio of water to alcohol in the permeate)

$$\alpha = \frac{(Y_W / Y_O)}{(X_W / X_O)}$$

**Eq. 1**

KA substrate itself has very low separation factors both for ethanol and methanol against water; the separation factors are ~ 4 for ethanol/water mix and ~ 2 for methanol/water mix.

*Example 6: Vapor permeation experiments of zeolitic membranes with different KINa ratios*

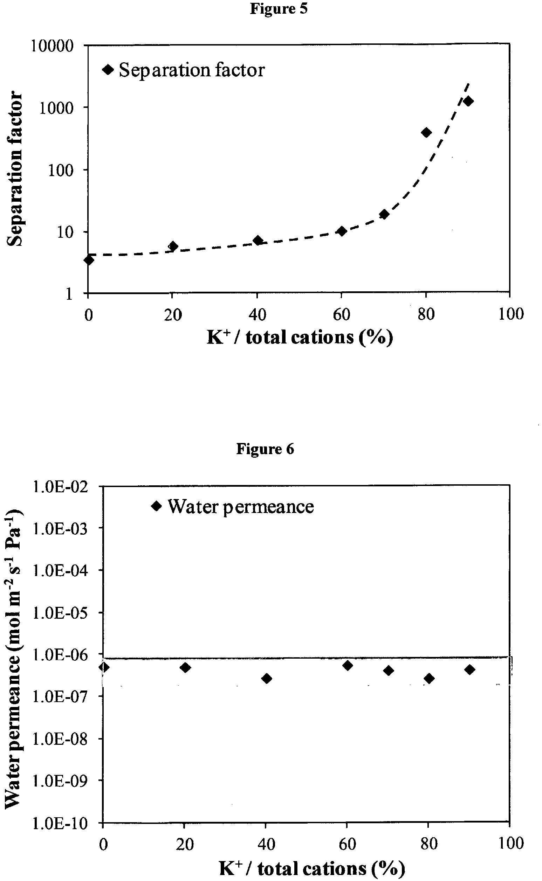

The apparatus used for vapor permeation to separate the mixture of water and alcohols of zeolite NaA membrane is the same as Example 5. The experimental parameters are also the same as **Example 5.** The overview of separation factors and water permeances of the membranes with different K/Na ratios is depicted in Figure 5 and 6.
NaA zeolite membrane has very high separation factors for ethanol dehydration but very low separation factors for methanol dehydration. The separation factors are over 1000 for ethanol dehydration and only ~ 5 for methanol at 125 °C. A water permeance of $5.02 \times 10^{-7}$ mol m$^{-2}$ s$^{-1}$ Pa$^{-1}$ is obtained in methanol/water separation.
K80 membrane has separation factors around 480 at 100 °C for methanol dehydration, the $H_2O$ permeance being $2.76 \times 10^{-7}$ mol m$^{-2}$ s$^{-1}$ Pa$^{-1}$. At 125 °C, the separation factors are ~ 400 and the $H_2O$ permeance is $2.59 \times 10^{-7}$ mol m$^{-2}$ s$^{-1}$ Pa$^{-1}$.
K90 membrane has separation factors over 1000 at 125 °C for methanol/water mixture, the $H_2O$ permeance is about $4.16 \times 10^{-7}$ mol m$^{-2}$ s$^{-1}$ Pa$^{-1}$

**Claims**

1. A method for the preparation of shape selective membrane applied for $H_2O$ separation from an alcohol contained mixture (especially methanol).

2. The method for the preparation of zeolitic membrane in _**claim 1**_ comprises:

   a. Preparation of the mother liquid
   b. Synthesis of dense membrane over substrate
   c. Chemical modification of membrane synthesized as _**recited in claim 2, wherein the step b**_ to certain level

3. One of the possible method as _**recited in claim 2, wherein the step a,**_ comprises: _**"Aluminate solution prepared by dissolving sodium hydroxide with sodium aluminate in water and silicate solution prepared by dissolving sodium hydroxide with sodium methasilicate in water mix together, resulting in a clear mother liquid."**_

4. The molar ratio of mother liquid in _**claim 2, wherein the step b**_ and _**claim 3**_ is: _**$SiO_2:Al_2O_3:Na_2O:H_2O = 5:1:50:1000$**_.

5. In the method _**as recited in claim 2, wherein the step a**_, different aluminum and silicon sources are also able to be applied, resulting in different final molar ratios of the mother liquid, e.g. $SiO_2: Al_2O_3: Na_{2O}: H_2O = 5:1:50:800$ in case of aluminum, sodium silicate, sodium hydroxide and water.

6. The composition of substrates as _**recited in claim 2, wherein the step b,**_ is: _**$\alpha$-alumina or LTA zeolite.**_

7. The method as _**recited in claim 2, wherein the step b,**_ comprises: _**"Hydrothermal synthesis is Performed at 363 K for 2h under atmospheric pressure with substrate usine prepared mother liquid.**_"

8. The method as _**recited in claim 2, wherein the step c,**_ comprises: _**"The mixed solution of potassium and sodium nitrates with the total concentration of 1 mol/L is used for chemical modification. The chemical modification lasts for 5 ∼ 12 hours at ambient temperature, and was repeated for 7 ∼ 10 times by using fresh aliquots of mixed solution for each repetition. After chemical modification, the membrane is rinsed and immersed into water for 1 day, resulting a certain potassium percentage out of all cations"**_

9. The concentrations of mixed solution of potassium and sodium nitrates in _**claim 8**_ are: _**potassium nitrate 0.93 mol/L, sodium nitrate 0.07 mol/L.**_

10. The potassium percentage out of all cations in _**claim 8**_ is: _**KlNa = 9:1.**_


**Amended claims in accordance with Rule 137(2) EPC.**

1. A method for the preparation of shape selective membrane applied for the separation of $H_2O$ from a mixture containing alcohols and water (more preferably from a mixture containing methanol and water), having a $K^+$ exchange degree of at least 90 at. % $K^+$ of total ion exchange capacity the rest being $Na^+$ **(independent claim).**

2. A method according to claim 1, wherein the shape selective membrane is a zeolitic membrane, the method for the preparation of the zeolitic membrane comprises:

   a. Preparation of a mother liquid
   b. Synthesis of dense membrane over substrate
   c. Chemical modification of the zeolitic membrane over substrate synthesized according to claim 2 _step b._

3. A method according to claim 2, wherein the mother liquid in _step a_ comprises a clear homogeneous mixture of aluminate solution prepared by dissolving sodium hydroxide and sodium aluminate in water and a silicate solution prepared by dissolving sodium hydroxide with sodium metasilicate in water.

4. A method according to claim 2, wherein the mother liquid in _step a_ comprises the components $SiO_2:Al_2O_3:Na_2O:H_2O = 5:1:50:1000$.

5. A method according to claim 2, wherein the mother liquid in _step a_ comprises the components $SiO_2: Al_2O_3: Na_2O: H_2O = 5:1:50:800$ in case of aluminum, sodium silicate, sodium hydroxide and water.

6. A method according to claim 2, wherein the substrate in _step b,_ is: alpha-alumina or LTA zeolite.

7. A method according to claim 2, wherein the dense zeolitic membrane in *step b,* was synthesized following the hydrothermal treatment at 363 K for 2 h under atmospheric pressure by using the mother liquid prepared according to claim 2, *step a* and a substrate according to claim 6.

8. A method according to claim 2, wherein the chemically modified membrane in *step c* is synthesized by mixing the solution of potassium and sodium nitrate, more preferably, potassium nitrate, with a total concentration of 1 M. The zeolitic membrane prepared according to *step 2b* is immersed in this solution for 24 hours. After 24 hours, the membrane is removed from the solution and immersed again in a fresh solution of potassium and sodium nitrate, more preferably, potassium nitrate, with a total concentration of 1 M. The procedure is repeated at least for 7 times but not more than 15 times having a $K^+$ exchange degree of at least 90 at. % $K^+$ of total ion exchange capacity the rest being $Na^+$.

Figure 1

Figure 2

**Figure 3**

**Figure 4**

Figure 5

Figure 6

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG N ET AL: "Hydrophilic SOD and LTA membranes for membrane-supported methanol, dimethylether and dimethylcarbonate synthesis", MICROPOROUS AND MESOPOROUS MATERIALS, vol. 207, 12 January 2015 (2015-01-12), pages 33-38, XP029142025, ISSN: 1387-1811, DOI: 10.1016/J.MICROMESO.2014.12.028 * abstract; figure 6; table 1 * * section 2.2 * * the whole document * | 1-8 | INV. B01D53/22 B01D67/00 B01D69/10 B01D71/02 B01D69/02 B01J20/18 C01B39/14 |
| X | SAEED SHIRAZIAN ET AL: "LTA and ion-exchanged LTA zeolite membranes for dehydration of natural gas", JOURNAL OF INDUSTRIAL AND ENGINEERING CHEMISTRY, vol. 22, 1 February 2015 (2015-02-01), pages 132-137, XP055288212, KOREA ISSN: 1226-086X, DOI: 10.1016/j.jiec.2014.06.034 * abstract * * Experimental * | 1-10 | |
| A | Z ET AL: "Application of zeolite-filled pervaporation membrane", ZEOLITES, ELSEVIER SCIENCE PUBLISHING, US, vol. 16, no. 1, 1 January 1996 (1996-01-01), pages 70-74, XP004033342, ISSN: 0144-2449, DOI: 10.1016/0144-2449(95)00094-1 * abstract * | 1-10 | TECHNICAL FIELDS SEARCHED (IPC) B01D B01J C01B |

-/--

The present search report has been drawn up for all claims

| Place of search | Date of completion of the search | Examiner |
|---|---|---|
| Munich | 7 September 2016 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

**EUROPEAN SEARCH REPORT**

Application Number

EP 16 00 0517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI ET AL: "Pervaporation and vapor permeation dehydration of Fischer-Tropsch mixed-alcohols by LTA zeolite membranes", SEPARATION AND PURIFICATION TECHNOLOGY, ELSEVIER SCIENCE, AMSTERDAM, NL, vol. 57, no. 1, 20 August 2007 (2007-08-20), pages 140-146, XP022207811, ISSN: 1383-5866, DOI: 10.1016/J.SEPPUR.2007.03.027 * abstract; table 1 * * Experimental * | 1-10 | |

TECHNICAL FIELDS
SEARCHED        (IPC)

The present search report has been drawn up for all claims

| Place of search | Date of completion of the search | Examiner |
|---|---|---|
| Munich | 7 September 2016 | Hennebrüder, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4013521 A, R. H. Scott
- US 4065483 A, A. Pinto
- US 4419940 A, A. Pinto
- US 4210495 A, A. Pinto
- US 4744869 A, Y. Saito, O. Hashimoto
- US 4874474 A, C. Rescalli, R. Ricci, A. Scazzosi, F. Cianci
- US 5079267 A, R. L. Kao, Sarabijit. S. Randhava, Surjit. S. Randhava
- US 4405343 A, D. F. Othmer
- US 5554286 A, K. Okamoto, H. Kita, M. Kondo, N. Miyake, Y. Matsuo

### Non-patent literature cited in the description

- **H. L. FLEMING.** *Chem. Eng. Prog.,* 1992, 46-52
- Pervaporation Membrane Separation Processes. Elsevier, 1991
- **S.I. SEMENOVA ; H. OHYA ; K. SOONTARAPA.** *Desalination,* 1997, vol. 110, 251-286
- **X. FENG ; R. Y. M. HUANG.** *Ind. Eng. Chem. Res.,* 1997, vol. 36, 1048-1066
- **Y. MORIGAMI ; M. KONDO ; J. ABE ; H. KITA ; K. OKAMOTO.** *Sep. Purif. Tech.,* 2001, vol. 25, 251-260
- **K. OKAMOTO ; H. KITA ; K. HORII ; K. TANAKA ; M KONDO.** *Ind. Eng. Chem. Res.,* 2001, vol. 40, 163-175
- **Q. LIU ; R. D. NOBLE ; J. L. FALCONER ; H. H. FUNKE.** *J. Membr. Sci.,* 1996, vol. 117, 163-174
- **N. WANG ; Y. LIU ; A. HUANG ; J. CARO.** *Microporous Mesoporous Mater.,* 2015, vol. 207, 33-38
- **K. SATO ; K. AOKI ; K. SUGIMOTO ; K. IZUMI ; S. INOUE ; J. SAITO ; S. IKEDA ; T. NAKANE.** *Microporous Mesoporous Mater.,* 2008, vol. 115, 184-188